# EUROPEAN PATENT APPLICATION

(11) **EP 3 677 124 A2**
(43) Date of publication of application: **08.07.2020**
(21) Application number: 18849986.7
(22) Date of filing: 31.08.2018
(51) Int. Cl.: A23L 17/00, A23L 33/20, A23L 33/175

(54) **FISH SAUCE HAVING INCREASED TRYPTOPHAN AND METHOD FOR PRODUCING FISH SAUCE**

(30) Priority: 01.09.2017 KR 20170111628; 01.09.2017 KR 20170111632
(71) Applicant: Jang, Young Jin, Yeonggwang-gun, Jeollanam-do 57024 (KR)
(72) Inventor: LEE, Ho Woo, Gwangju 62012 (KR); JANG, Young Jin, Gwangju 62012 (KR)
(74) Representative: Beck & Rössig European Patent Attorneys
(86) International application number: PCT/KR2018/010122
(87) International publication number: WO 2019/045509

(57) **Abstract**

The present invention relates to a fish sauce and a method of manufacturing a fish sauce. More particularly, the present invention relates to a fish sauce having increased content of tryptophan and a method of manufacturing the fish sauce, in which antioxidant activity is increased due to the increased content of tryptophan contained as an active ingredient, a fermentation period is drastically shortened, and a content of salt is low to improve a health benefit.

## Description

### Technical Field

The present invention relates to a fish sauce and a method of manufacturing a fish sauce. More particularly, the present invention relates to a fish sauce having increased content of tryptophan and a method of manufacturing the fish sauce, in which antioxidant activity is increased due to the increased content of tryptophan contained as an active ingredient, a fermentation period is drastically shortened, and a content of salt is low in order to improve a health benefit.

### Background Art

During the process of rapid industrialization and urbanization, eating out and the consumption of Western food and instant food, such as fast food and pizza, have increased due to the effects of income level improvement, the nuclearization of the family, and the increased number of single-person households. In particular, Koreans also consume high-sodium foods such as soup, stew, kimchi, Korean sauces, and salted seafood. Accordingly, it is known that the daily sodium intake of Koreans ranges from 6,000 mg to 8,000 mg, which is more than twice the amount recommended by the World Health Organization (WHO) (3,450 mg), and thus that Koreans consume excessive sodium. Excessive sodium intake is a major cause of chronic diseases such as high blood pressure, heart diseases, cerebral cardiovascular diseases, kidney diseases, and stomach cancer.

Recently, there has been interest in reducing sodium intake to prevent chronic diseases and improve a health benefit, and as a result, research on the development of low-sodium salts or salty-taste enhancers is in progress. Examples thereof include natural salts having increased content of mineral ingredients, natural seasoning agents for salt replacement including solutions of natural extracts such as *Salicornia herbacea* L., kelp, Chinese matrimony vines, onion, shiitake mushroom, radish, and garlic, low-sodium salts to which potassium chloride, calcium chloride, or magnesium chloride is added instead of sodium, and chemical seasoning agents such as aspartate and monosodium glutamate (MSG). However, the low-sodium salt is less salty, so it must be used in a larger amount compared to conventional salt, and therefore, a lot of sodium is ingested. When a kidney disease patient ingests salt containing potassium and calcium, it causes difficulty in breathing, chest pain, and heart attacks. Further, chemical seasoning agents manufactured by artificial synthesis are absorbed into nervous tissue when ingested in excess, causing symptoms such as headaches, vomiting, nausea, and tongue paralysis due to the destruction of cell membranes. Chemical seasoning agents have recently been recognized as carcinogens, and thus cause problems related to stability and harm.

Meanwhile, soy sauce is a seasoning that is encountered in various forms at the dining table every day in Korea, and is generally made from fermented soybean lumps, a delicious source of amino acids. Due to the limited supply thereof, there is a limit in manufacturing soy sauce that is more delicious. Therefore, as an alternative thereto, efforts have been made to find an amino acid source other than fermented soybean lumps, and a representative example thereof is fish sauce.

Fish sauce has been used to maintain an adequately high supply of protein and salt regardless of the season, and along with kimchi has been a representative fermented food in Korea since ancient times. Specifically, fish sauce is a salted product in the broad sense, and is obtained by salting fish and shellfish, fermenting and aging the salted fish and shellfish, and separating a supernatant liquid by filtration. When the muscles, intestines, and eggs of the fish and shellfish are salted and then preserved, autodigestion and fermentation occur due to various enzymes present in fish and shellfish. Accordingly, various kinds of amino acids are generated therefrom, imparting a special flavor and palatability. Further, it is known that fish sauce is nutritionally excellent due to rich amino acids and inorganic ingredients thereof and is also good in digestion absorption because the fish sauce includes low molecules.

However, in spite of the special flavor or potential value of use, conventional fish sauce contains a high concentration of salt and a predetermined amount of biogenic amine ingredient. Accordingly, there are associated health-stability-related problems.

In particular, the conventional fish sauce contains tryptophan, which is one kind of amino acid, but since the content thereof is insignificant, antioxidant activity cannot be expected.

Meanwhile, Korean Patent No. 10-1655540 entitled 'low-salt fish soy sauce and method of manufacturing the same' discloses a fish sauce having a controlled content of tryptophan. However, this is a fish soy sauce having a reduced content of tryptophan so as to avoid a bitter taste, and has a problem in that the antioxidant activity is further reduced due to the reduced content of tryptophan ingredient.

### Disclosure

### Technical Problem

Accordingly, the present invention has been made keeping in mind the above problems occurring in the prior art, and an object of the present invention is to provide a fish sauce having increased content of tryptophan to thus increase the antioxidant activity of products, and a method of manufacturing the fish sauce.

Another object of the present invention is to provide a high-quality fish sauce, which has a low content of salt and a minimized content of biogenic ingredients to thus improve a health benefit thereof, and a method of manufacturing the fish sauce.

Yet another object of the present invention is to provide a fish sauce and a method of manufacturing a fish sauce, in which fish/shellfish raw materials are fermented with agitation and a salt is then added thereto to thus manufacture the fish sauce, thereby drastically shortening a fermentation period.

The objects of the present invention are not limited to the above-mentioned objects, and other objects that are not mentioned will be clearly understood by those skilled in the art from the following description.

### Technical Solution

In order to accomplish the above objects, the present invention provides a fish sauce manufactured using fish and shellfish as a raw material according to a fermentation process. The fish sauce includes, among amino acids, tryptophan in a content of more than 5 wt% based on the total weight of the amino acids.

In a preferable embodiment, among the amino acids, 35 to 45 wt% of sweet-tasting amino acids and 15 to 25 wt% of umami-tasting amino acids are included based on the total weight of the amino acids.

In a preferable embodiment, the sweet-tasting amino acids include serine, threonine, glycine, proline, leucine, and alinine, and the umami-tasting amino acids include glutamic acid and aspartic acid.

In a preferable embodiment, the fish sauce includes salt in a content of less than 10 wt% based on the total weight of the fish sauce.

In a preferable embodiment, the fish sauce includes histamine in a content of less than 50 ppm.

In a preferable embodiment, the fish and shellfish are any one selected from the group consisting of sand lance, anchovy, tuna, shrimp, herring, mackerel, and a combination thereof.

The present invention also provides a method of manufacturing a fish sauce. The method includes preparing fish/shellfish raw materials, fermenting the prepared fish/shellfish raw materials, and obtaining a filtrate by filtering a fermented substance generated during the fermenting and then removing a residue. The fermenting is performed with agitation under an anaerobic condition at 50 to 300 rpm, and the filtrate includes, among amino acids, tryptophan in a content of more than 5 wt% based on the total weight of the amino acids.

In a preferable embodiment, the fermenting is performed in 7 days or less.

In a preferable embodiment, the fermenting is performed at a predetermined temperature in a temperature range from 45 to 55°C.

In a preferable embodiment, the method further includes adding a salt to the filtrate obtained through the obtaining the filtrate after the obtaining the filtrate.

In a preferable embodiment, in the adding the salt, the salt is added in a content of less than 10 parts by weight based on 100 parts by weight of the fish/shellfish raw materials.

In a preferable embodiment, the fish/shellfish raw materials are any one selected from the group consisting of sand lance, anchovy, tuna, shrimp, herring, mackerel, and a combination thereof.

In a preferable embodiment, the preparing the fish/shellfish raw materials include washing the fish/shellfish raw materials and a semi-drying step of drying the washed fish/shellfish raw materials so that a moisture content thereof is 30 to 55%.

In a preferable embodiment, the method further and sequentially includes, after the adding the salt, aging the filtrate to which the salt is added and sterilizing the aged filtrate to obtain a liquid fish sauce.

In a preferable embodiment, the aging is performed at a predetermined temperature in a temperature range from 45 to 55°C for 10 to 15 days.

In a preferable embodiment, the sterilizing includes performing heat treatment at a predetermined temperature in a temperature range from 70 to 100°C for 5 to 30 minutes.

In a preferable embodiment, the fish sauce includes, among amino acids, 35 to 45 wt% of sweet-tasting amino acids and 15 to 25 wt% of umami-tasting amino acids based on the total weight of the amino acids, the sweet-tasting amino acids include serine, threonine, glycine, proline, leucine, and alinine, and the umami-tasting amino acids include glutamic acid and aspartic acid.

In a preferable embodiment, the fish sauce includes histamine in a content of less than 50 ppm.

### Advantageous Effects

The present invention has the following excellent effects.

First, according to a fish sauce and a method of manufacturing a fish sauce of the present invention, fish/shellfish raw materials are fermented with agitation and a salt is then added thereto to thus manufacture the fish sauce, thereby drastically shortening a fermentation period, which increases production efficiency.

Further, according to the fish sauce and the method of manufacturing the fish sauce of the present invention, only a small amount of salt is added after a fermentation step, thus reducing the salt content of the product to improve the health benefit thereof.

Further, according to the fish sauce and the method of manufacturing the fish sauce of the present invention, the content of tryptophan contained in the fish sauce is increased to improve antioxidant activity.

Further, according to the fish sauce and the method of manufacturing the fish sauce of the present invention, the fish/shellfish raw materials are semi-dried and the fermentation process is completed in a short time without adding salt, thereby minimizing the content of biogenic amines generated during the fermentation process.

Further, according to the fish sauce and the method of manufacturing the fish sauce of the present invention, the total content of free amino acids is greatly increased, and sweet-tasting amino acids, umami-tasting amino acids, and bitter-tasting amino acids are included at an optimal ratio. Accordingly, even when the content of tryptophan, which is known as one of the bitter-tasting amino acids, is greatly increased, the taste of the fish sauce is improved due to the interaction of tastes.

### Description of Drawings

FIG. 1 is a view showing the steps of a method of manufacturing a fish sauce according to an embodiment of the present invention;
FIG. 2 is a graph showing fermentation efficiency depending on an agitation condition in a fermentation step;
FIG. 3 is a graph showing the total nitrogen content of the fish sauce obtained according to a fermentation period at different temperatures;
FIG. 4 is a graph showing the amino nitrogen content of the fish sauce obtained according to the fermentation period at different temperatures;
FIG. 5 is a graph showing the histamine content of the fish sauce obtained according to the fermentation period at different temperatures;
FIG. 6 is a graph showing the volatile basic nitrogen (VBN) content of the fish sauce obtained according to the fermentation period at different temperatures;
FIG. 7 is a graph showing the pH of the fish sauce obtained according to the fermentation period at different temperatures;
FIG. 8 is a graph showing the results of the DPPH experiment on the fish sauce manufactured using the method of manufacturing the fish sauce according to the embodiment of the present invention; and
FIG. 9 is an image showing the results of the microbial contamination experiment on the fish sauce manufactured using the method of manufacturing the fish sauce according to the embodiment of the present invention.

### Best Mode

A fish sauce according to an embodiment of the present invention is a fish sauce having increased content of tryptophan as an active ingredient obtained using fish and shellfish as raw materials according to a fermentation process. The fish sauce has an increased content of tryptophan as the active ingredient.

It is preferable that the tryptophan be included in a content of more than 5 wt% based on the total weight of amino acids.

The content of tryptophan among the amino acids included in the fish sauce is increased, so that the antioxidant activity is significantly improved compared to conventional fish sauces.

Meanwhile, the fish and shellfish mean any one among anchovy, octopus, squid, sardine, cutlassfish, herring, gizzard shad, mackerel, smelt, sand lance, yellowtail, skates, tuna, horse mackerel, pacific saury, tiny shrimp, blenny, dried yellow corvinas, pollack, lance-fish, mussels, manila clam, shrimp, and crabs, or a mixture of two or more thereof. Any raw material may be used without limitation as long as it is capable of being used as the raw material of a typical fish sauce.

Further, it is preferable that, among the amino acids, 35 to 45 wt% of sweet-tasting amino acids and 15 to 25 wt% of umami-tasting amino acids be included based on the total weight of the amino acids.

The reason is as follows. The content of tryptophan is increased in the fish sauce, but tryptophan is a bitter-tasting amino acid. Thus, the content of sweet-tasting amino acids and the content of umami-tasting amino acids are increased so that consumers do not taste strong bitterness due to the interaction of the tastes, thereby improving the preference and harmony of the tastes thereof.

The sweet-tasting amino acids include serine, threonine, glycine, proline, leucine, and alinine, and the umami-tasting amino acids include glutamic acid and aspartic acid.

Further, the fish sauce according to the present invention includes salt in a content of less than 10 wt% based on the total weight of the fish sauce.

The content of salt included in the fish sauce is minimized, thus reducing the sodium intake of consumers, which improves a health benefit.

Further, the fish sauce according to the present invention includes histamine in a content of less than 50 ppm.

Histamine is a kind of biogenic amine, is generated during the fermentation process of food containing protein, and is a substance causing various side effects in the human body. The fish sauce according to the present invention includes histamine in a content of less than 50 ppm, thus preventing various side effects in the human body. Thereby, a high-quality fish sauce with an improved health benefit is provided.

Further, the present invention further provides a method of manufacturing a fish sauce in order to manufacture the above-described fish sauce.

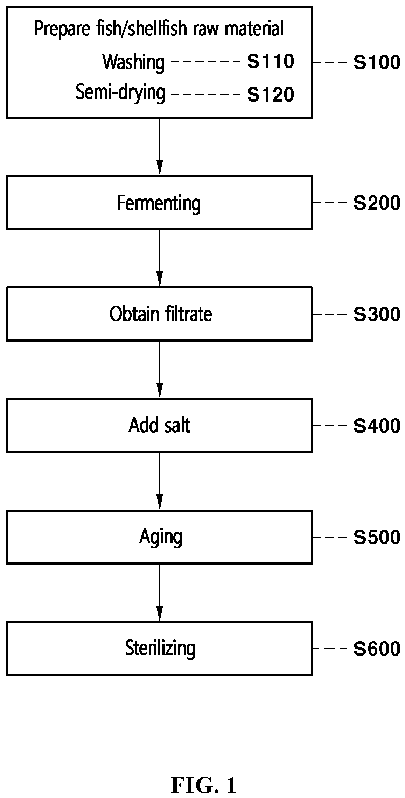

FIG. 1 is a view showing the steps of a method of manufacturing a fish sauce according to the present invention.

Referring to FIG. 1, the method of manufacturing the fish sauce according to an embodiment of the present invention relates to a method of manufacturing a fish sauce, in which a fermentation process is completed in a short time using fish and shellfish as raw materials. First, a step of preparing fish/shellfish raw materials is performed at step S100.

The fish/shellfish raw materials mean any one among anchovy, octopus, squid, sardine, cutlassfish, herring, gizzard shad, mackerel, smelt, sand lance, yellowtail, skates, tuna, horse mackerel, pacific saury, tiny shrimp, blenny, dried yellow corvinas, pollack, lance-fish, mussels, manila clam, shrimp, and crabs, or a mixture of two or more thereof. Any raw material may be used without limitation as long as it is capable of being used as the raw material of a typical fish sauce.

Further, the step of preparing the fish/shellfish raw materials at step S100 may include a washing step at step S110 and a semi-drying step at step S120.

In more detail, the washing step at step S110 is a process of sufficiently washing the fish/shellfish raw materials using brine or water, and the semi-drying step at step S120 is a step of drying the washed fish/shellfish raw materials to an appropriate moisture content.

A typical dryer may be used as a drying means for drying the fish/shellfish raw materials, and the drying means is not limited.

Further, in the semi-drying step at step S120, it is preferable to dry the fish/shellfish raw materials so that the moisture content thereof is 30 to 55%.

The reason is as follows. When the moisture content is less than 30%, the fermentation efficiency of a fermentation step to be described later is reduced. When the moisture content is more than 55%, the generated amount of the biogenic amine ingredient in the fermentation step is increased, and decomposition occurs in more severe cases.

Next, a step of fermenting the prepared fish/shellfish raw materials is performed at step S200.

Preferably, water is not further added to the fish/shellfish raw materials, and only the fish/shellfish raw materials having a moisture content of 30 to 55% are added to a fermentation device via the semi-drying step at step S120.

The fermenting step at step S200 is performed while the prepared fish/shellfish raw materials are agitated under an anaerobic condition.

It is preferable that the agitation speed be 50 to 300 rpm.

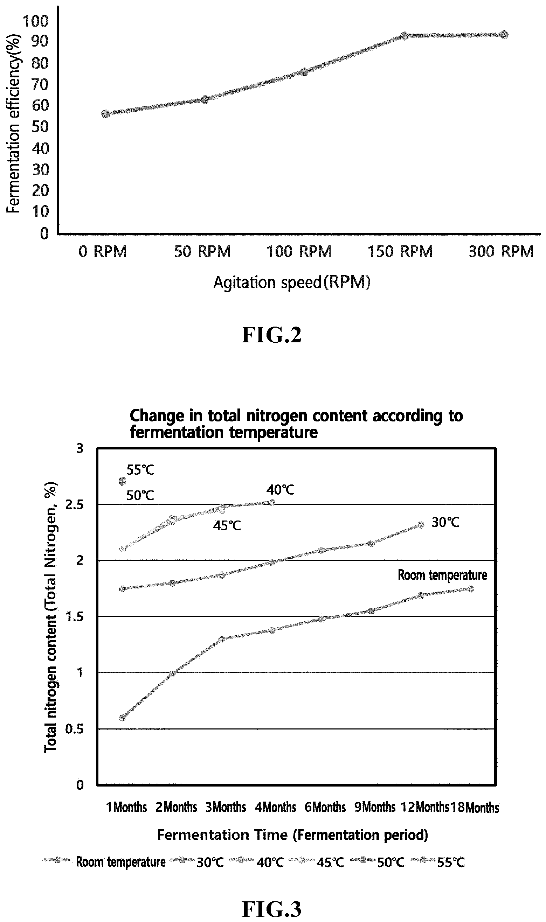

This is to maximize the fermentation efficiency of the fermentation step. As shown in FIG. 2, when the rpm of agitation is less than 50 rpm, an increase of fermentation efficiency is insignificant. When the rpm of agitation is more than 300 rpm, the fermentation efficiency is not increased any further.

Meanwhile, in the present invention, the "fermentation efficiency" was calculated as "total nitrogen content of the obtained fish sauce / total nitrogen content of the added fish/shellfish raw materials X 100".

Further, in the fermenting step at step S200, it is preferable that a fermentation temperature be a predetermined temperature in a temperature range from 45 to 55°C.

The reason is as follows. When the fermentation temperature is less than 45°C, a fermentation period is increased. When the fermentation temperature is more than 55°C, the fermentation period is not shortened any further and protein modification may occur during the fermentation process.

In the method of manufacturing the fish sauce according to the present invention, the fermentation step may be performed under optimum agitation and temperature conditions without the addition of salt, so that the fermentation process is completed in 7 days or less. Accordingly, the fermentation period may be drastically shortened compared to a conventional technology, thus maximizing the production efficiency of the fish sauce. Moreover, the generation of biogenic amines may be minimized due to the shortened fermentation period.

Next, a step of obtaining a filtrate by filtering a fermented substance generated during the fermenting step and then removing a residue is performed at step S300.

Subsequently, a step of adding a salt to the filtrate is performed at step S400.

The salt is added in a content of less than 10 parts by weight based on 100 parts by weight of the fish/shellfish raw materials.

The content of the salt included in the fish sauce is minimized, so that the sodium intake of consumers (takers) is reduced to improve the health benefit.

Further, it is preferable to use bay salt as the above-described salt.

Further, the method of manufacturing the fish sauce according to the present invention may further and sequentially include, after the step of adding the salt at step S400, an aging step at step S500 and a sterilizing step at step S600.

The aging step at step S500 is a process of aging the filtrate to which the salt is added, and is performed at a predetermined temperature in a temperature range from 45 to 55°C for 10 to 15 days.

Further, the sterilizing step at step S600 is a process of sterilizing the aged filtrate to obtain a liquid fish sauce. The aged filtrate is heat-treated at a predetermined temperature in a temperature range from 70 to 100°C for 5 to 30 minutes, thus obtaining the fish sauce.

The fish sauce manufactured using the method of manufacturing the fish sauce according to the present invention includes, among amino acids, tryptophan in a content of more than 5 wt% based on the total weight of the amino acids.

The content of tryptophan among the amino acids included in the fish sauce is drastically increased, thus significantly improving the antioxidant activity compared to conventional fish sauces.

Further, the fish sauce includes, among the amino acids, 35 to 45 wt% of sweet-tasting amino acids and 15 to 25 wt% of umami-tasting amino acids based on the total weight of the amino acids.

The content of tryptophan, which is a bitter-tasting amino acid, is increased, but the content of sweet-tasting amino acids and the content of umami-tasting amino acids are also increased, so that consumers do not taste strong bitterness due to the interaction of the tastes, thereby improving the preference therefor and the harmony of tastes thereof.

The sweet-tasting amino acids may include serine, threonine, glycine, proline, leucine, and alinine, and the umami-tasting amino acids may include glutamic acid and aspartic acid.

Further, the fish sauce includes histamine, which is one kind of biogenic amine, in a content of less than 50 ppm.

The histamine, which is known as a substance causing various side effects in the human body, is included in a content of less than 50 ppm, so that various side effects are prevented in the human body, thereby improving the health benefit.

### Mode for Invention

### (Example 1)

Fresh anchovies having a length of about 17 cm caught in the south coast as the raw seafood material were washed twice with brine, and then semi-dried so that a moisture content thereof was 30 to 55%, thus preparing a raw material.

Thereafter, the semi-dried anchovies were fermented with agitation at a temperature of 50°C under an anaerobic condition at 50 rpm, thus generating a fermented substance.

As for the fermentation period, the fermentation was completed in 48 hours.

Thereafter, the generated fermented substance was filtered and a residue was then removed, thus obtaining a filtrate. Then, a salt was added in a content of less than 10 parts by weight based on 100 parts by weight of the raw material, thus obtaining a fish sauce (Example 1).

### (Example 2)

A fish sauce (Example 2) was obtained using the same process as in Example 1, except that the rpm of agitation was 100 rpm.

### (Example 3)

A fish sauce (Example 3) was obtained using the same process as in Example 1, except that the rpm of agitation was 150 rpm.

### (Example 4)

A fish sauce (Example 4) was obtained using the same process as in Example 1, except that the rpm of agitation was 300 rpm.

### (Comparative Example 1)

Fresh anchovies having a length of about 17 cm caught in the south coast as the raw seafood material were washed twice in the same manner as in the Examples, 20 parts by weight of a salt was added based on 100 parts by weight of the washed raw material, and fermentation was performed at a temperature of 30°C under an anaerobic condition, thus generating a fermented substance.

As for the fermentation period, fermentation was performed for 12 months.

Thereafter, the generated fermented substance was filtered and a residue was then removed, thus obtaining a fish sauce (Comparative Example 1).

### (Comparative Examples 2 to 4)

Fish sauce A, fish sauce B, and fish sauce C distributed in Korea were used as Comparative Example 2, Comparative Example 3, and Comparative Example 4, respectively.

### (Experimental Example 1: Analysis of fermentation quality for each rpm of agitation)

A total nitrogen content, an amino nitrogen content, a histamine content, a volatile basic nitrogen (VBN) content, and a pH were confirmed using Comparative Example 1 and Examples 1 to 4. The results are shown in the following Table 1 and FIG. 2.

**[Table 1]**

| | Comparative Example 1 | Example 1 | Example 2 | Example 3 | Example 4 |
|---|---|---|---|---|---|
| Total nitrogen (%) | 1.7 | 1.9 | 2.25 | 2.8 | 2.78 |
| Amino nitrogen (AN, mg/100g) | 879 | 1,128 | 1,521 | 2,670 | 2,670 |
| Histamine (ppm) | 658 | 359 | 40 | 12 | 15 |
| Volatile basic nitrogen (mg%) | 320 | 258 | 110 | 40 | 45 |
| pH | 6 | 5.8 | 5.6 | 5.2 | 5.22 |

That is, as shown in Table 1 and FIG. 2, in Examples 1 to 4, the total nitrogen and amino nitrogen contents are high, the content of histamine, which is one of the biogenic ingredients, is low, and the amount of the volatile basic nitrogen that is generated is small compared to Comparative Example 1, whereby an excellent fish sauce is manufactured.

Further, when the pH of the fish sauce is more than 5.8, precipitates in the form of gallstones may be formed during distribution and storage processes. However, in Examples 1 to 5, since the fish sauce is manufactured so that the pH is 5.8 or less, the precipitates in the form of gallstones are not formed.

In particular, in the case of Example 3, in which agitation was performed at 150 rpm, it was confirmed that the best fish sauce was manufactured in terms of all quality indicators including total nitrogen content, amino nitrogen content, histamine content, volatile basic nitrogen, and pH.

That is, it is preferable that the agitation speed be 50 to 300 rpm during the fermentation step. The reason is as follows. When the rpm of agitation is less than 50 rpm, the total nitrogen content and the amino nitrogen content are reduced, the generated amount of histamine, which is one of biogenic amine ingredients, is increased, volatile basic nitrogen is generated in a small amount, and the pH is increased, thus forming gallstone precipitates. When the rpm of agitation is more than 300 rpm, the fermentation efficiency is not increased any further.

### (Experimental Example 2: Analysis of fermentation quality at different temperatures)

The same process as in Example 3 was performed, except that the fermentation was performed at a fermentation temperature condition of room temperature, 30, 40, 45, 50, and 55°C.

The total nitrogen content, the amino nitrogen content, the histamine content, the volatile basic nitrogen (VBN) content, and the pH of the fish sauces obtained according to a fermentation period were confirmed at different temperatures. The results are described in the following Tables 2 to 6 and shown using graphs in FIGS. 3 to 7.

**[Table 2]**

| Total nitrogen content | Room temperature | 30°C | 40°C | 45°C | 50°C | 55°C |
|---|---|---|---|---|---|---|
| 1 month | 0.6 | 1.75 | 2.1 | 2.1 | 2.7 | 2.72 |
| 2 months | 0.99 | 1.8 | 2.35 | 2.38 | - | - |
| 3 months | 1.3 | 1.87 | 2.48 | 2.45 | - | - |
| 4 months | 1.38 | 1.98 | 2.52 | - | - | - |
| 6 months | 1.48 | 2.09 | - | - | - | - |
| 9 months | 1.55 | 2.15 | - | - | - | - |
| 12 months | 1.69 | 2.32 | - | - | - | - |
| 18 months | 1.75 | - | - | - | - | - |

Referring to Table 2 and FIG. 3, the total nitrogen content was found to be 2.7% within 1 month when the fermentation temperature was 50°C and 2.72% within 1 month when the fermentation temperature was 55°C.

**[Table 3]**

| Amino nitrogen (mg/100g) | Room temperature | 30°C | 40°C | 45°C | 50°C | 55°C |
|---|---|---|---|---|---|---|
| 1 month | 389 | 1320 | 2524 | 2530 | 2700 | 2701 |
| 2 months | 488 | 1452 | 2588 | 2602 | - | - |
| 3 months | 652 | 1554 | 2648 | 2658 | - | - |
| 4 months | 786 | 1766 | 2680 | - | - | - |
| 6 months | 987 | 2002 | - | - | - | - |
| 9 months | 1157 | 2138 | - | - | - | - |
| 12 months | 1385 | 2320 | - | - | - | - |
| 18 months | 1520 | - | - | - | - | - |

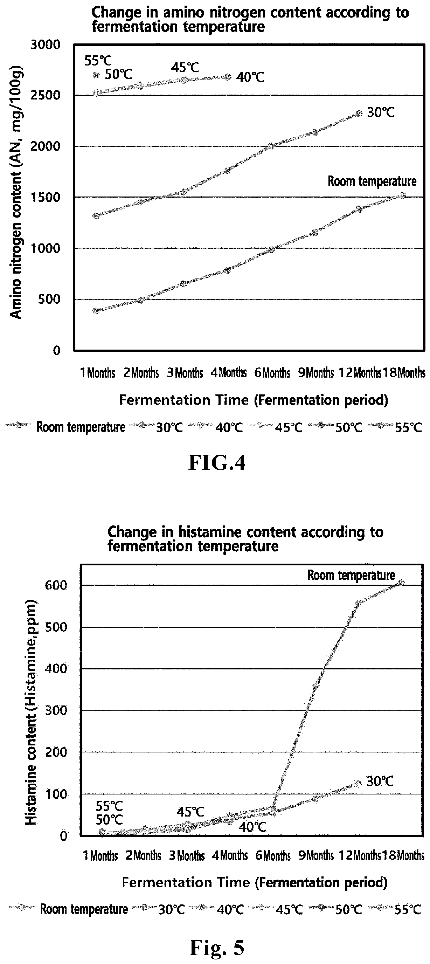

Referring to Table 3 and FIG. 4, the amino nitrogen content (mg/100 g) was found to be 2700 mg/100 g within 1 month when the fermentation temperature was 50°C and 2701 mg/100 g within 1 month when the fermentation temperature was 55°C.

In other words, when the fermentation temperature was room temperature, it was confirmed that the fermentation was not completed even though the fermentation process was performed for 18 months. It was confirmed that 12 months of fermentation time was required when the fermentation temperature was 30°C, 4 months of fermentation time was required when the fermentation temperature was 40°C, 3 months of fermentation time was required when the fermentation temperature was 45°C, and the fermentation was completed within 1 month when the fermentation temperature was 50°C or 55°C.

**[Table 4]**

| Histamine content (ppm) | Room temperature | 30°C | 40°C | 45°C | 50°C | 55°C |
|---|---|---|---|---|---|---|
| 1 month | 3 | 3 | 6 | 5 | 10 | 11 |
| 2 months | 12 | 7 | 15 | 10 | - | - |
| 3 months | 20 | 15 | 28 | 25 | - | - |
| 4 months | 48 | 40 | 35 | - | - | - |
| 6 months | 68 | 55 | - | - | - | - |
| 9 months | 358 | 89 | - | - | - | - |
| 12 months | 557 | 125 | - | - | - | - |
| 18 months | 606 | - | - | - | - | - |

Referring to Table 4 and FIG. 5, it was confirmed that the histamine content (ppm) was 10 ppm when the fermentation temperature was 50°C, 11 ppm when the fermentation temperature was 55°C, and 25 ppm when the fermentation temperature was 50°C.

Meanwhile, when the fermentation temperature was room temperature, 30°C, or 40°C, the content of histamine was found to be increased as the fermentation period was increased. Accordingly, it was confirmed that it was possible to reduce the amount of histamine that was generated by reducing the fermentation period.

**[Table 5]**

| VBN content (mg%) | Room temperature | 30°C | 40°C | 45°C | 50°C | 55°C |
|---|---|---|---|---|---|---|
| 1 month | 56 | 52 | 102 | 138 | 224 | 223 |
| 2 months | 89 | 60 | 185 | 157 | - | - |
| 3 months | 114 | 66 | 202 | 198 | - | - |
| 4 months | 138 | 89 | 228 | - | - | - |
| 6 months | 185 | 115 | - | - | - | - |
| 9 months | 220 | 160 | - | - | - | - |
| 12 months | 259 | 210 | - | - | - | - |
| 18 months | 321 | - | - | - | - | - |

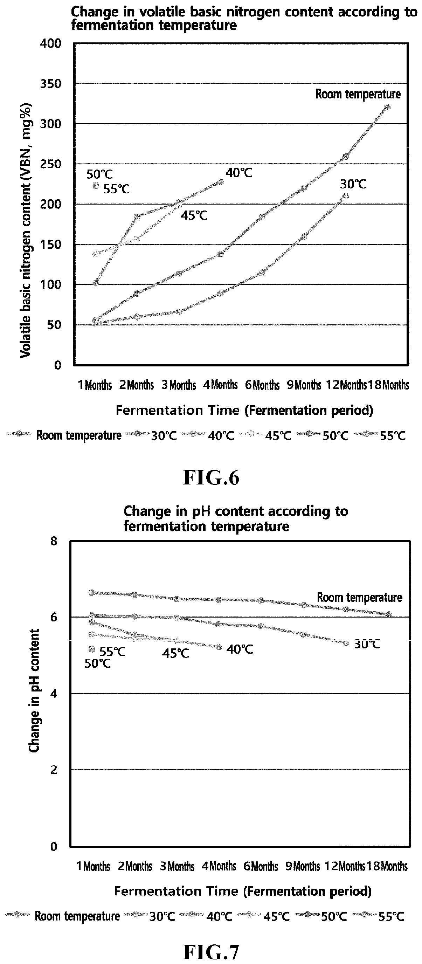

Referring to Table 5 and FIG. 6, it was confirmed that the fermentation was completed within 1 month when the fermentation temperature was 50°C or 55°C and that the volatile basic nitrogen content (mg%) was 224 mg% and 223 mg% at the respective temperatures.

Further, it was confirmed that fermentation was completed within 3 months and the volatile basic nitrogen content was 198 mg% when the fermentation temperature was 45°C, fermentation was completed within 4 months and the volatile basic nitrogen content was 228 mg% when the fermentation temperature was 40°C, fermentation was completed within 12 months and the volatile basic nitrogen content was 210 mg% when the fermentation temperature was 30°C, and a fermentation period of 18 months or more was required and the volatile basic nitrogen content was 321 mg% when the fermentation temperature was room temperature.

**[Table 6]**

| pH | Room temperature | 30°C | 40°C | 45°C | 50°C | 55°C |
|---|---|---|---|---|---|---|
| 1 month | 6.65 | 6.05 | 5.87 | 5.56 | 5.16 | 5.18 |
| 2 months | 6.59 | 6.02 | 5.55 | 5.44 | - | - |
| 3 months | 6.48 | 5.99 | 5.38 | 5.39 | - | - |
| 4 months | 6.46 | 5.82 | 5.22 | - | - | - |
| 6 months | 6.44 | 5.77 | - | - | - | - |
| 9 months | 6.32 | 5.55 | - | - | - | - |
| 12 months | 6.21 | 5.33 | - | - | - | - |
| 18 months | 6.08 | - | - | - | - | - |

Referring to Table 6 and FIG. 7, it was confirmed that fermentation was completed within 1 month when the fermentation temperature was 50°C or 55°C and that the pH was 5.16 and 5.18 at the respective temperatures.

Further, it was confirmed that fermentation was completed within 3 months and the pH was 5.39 mg% when the fermentation temperature was 45°C, fermentation was completed within 4 months and the pH was 5.22 when the fermentation temperature was 40°C, fermentation was completed within 12 months and the pH was 5.33% when the fermentation temperature was 30°C, and a fermentation period of 18 months or more was required and the pH was 6.08 when the fermentation temperature was room temperature.

Meanwhile, when the pH of the fish sauce is more than 5.8, a problem in that precipitates in the form of gallstones may be formed during distribution and storage processes was confirmed. Accordingly, it is an important technical task to make the pH of the fish sauce below 5.8. The method of manufacturing the fish sauce according to the present invention has a merit in that a fish sauce having a pH of less than 5.8 is manufactured without adding a separate additive.

That is, from Experimental Example 2, quality indicators including the total nitrogen content, the amino nitrogen content, the histamine content, the volatile basic nitrogen (VBN) content, and the pH of the obtained fish sauces were checked. As a result, it was confirmed that the fermentation temperature was preferably 45 to 55°C during the fermentation step.

### (Experimental Example 3: Analysis of amino acid ingredient)

Example 3 and Comparative Example 1 were prepared to perform the analysis of free amino acids, and the results are shown in the following Table 7.

The analysis of free amino acids was performed using an HPLC system.

**[Table 7]**

| Type | Amino acid | Comparative Example 1 (µg/ml) | Comparative Example 1 Ratio | Example 3 (µg/ml) | Example 3 Ratio |
|---|---|---|---|---|---|
| Sweet-tasting series | Serine | 136.54 | 2.87% | 113.43 | 2.02% |
| | Threonine | 140.57 | 2.96% | 94.84 | 1.69% |
| | Glycine | 575.55 | 12.11% | 828.89 | 14.78% |
| | Proline | 110.5 | 2.32% | 99.11 | 1.77% |
| | Leucine | 400.48 | 8.42% | 385.93 | 6.88% |
| | Alinine | 493.3 | 10.38% | 648.95 | 11.58% |
| Sum | | 1856.94 | 39.06% | 2171.15 | 38.73% |
| Umami-tasting series | Glutamic acid | 744.93 | 15.67% | 999.87 | 17.83% |
| | Aspartic acid | 224.68 | 4.73% | 223.98 | 4.00% |
| Sum | | 969.61 | 20.39% | 1223.85 | 21.83% |
| Bitter-tasting series and others | Valine | 232.41 | 4.89% | 257.19 | 4.59% |
| | Isoleucine | 206.39 | 4.34% | 201.57 | 3.60% |
| | Methionine | 196.78 | 4.14% | 220.03 | 3.92% |
| | Phenylalanine | 198.43 | 4.17% | 207.28 | 3.70% |
| | Tyrosine | 53.19 | 1.12% | 33.37 | 0.60% |
| | Lysine | 497.47 | 10.46% | 488.64 | 8.72% |
| | Arginine | 138.71 | 2.92% | 27.45 | 0.49% |
| | Histidine | 259.79 | 5.46% | 285.61 | 5.09% |
| | Tryptophan | 144.5 | 3.04% | 490.16 | 8.74% |
| Sum | | 1927.67 | 40.55% | 2211.3 | 39.44% |
| Total sum | | 4754.22 | 100% | 5606.3 | 100% |

As shown in Table 7, the content of tryptophan was found to be 490.16 (8.74%) and 144.5 (3.04%) in Example 3 and in Comparative Example 1, respectively. Therefore, it could be confirmed that the fish sauce manufactured using the method of manufacturing the fish sauce according to the present invention had significantly improved antioxidant activity.

Further, referring to Table 7, in Example 3, it was confirmed that the content of sweet-tasting amino acids was 2171.15 (38.73%), the content of umami-tasting amino acids was 1223.85 (21.83%), and the content of bitter-tasting amino acids was 2211.3 (39.44%). In the case of Comparative Example 1, it was confirmed that the content of sweet-tasting amino acids was 1856.94 (39.06%), the content of umami-tasting amino acids was 969.61 (20.39%), and the content of bitter-tasting amino acids was 1927.67 (40.55%).

That is, in the case of the fish sauce manufactured using the method of manufacturing the fish sauce according to the present invention, the total content of free amino acids was greatly increased, the content ratio of the sweet-tasting amino acids and the content ratio of the umami-tasting amino acids were increased, and the content ratio of the bitter-tasting amino acids was reduced compared to the fish sauce of Comparative Example 1. Accordingly, it could be confirmed that an effect of improving the taste was ensured due to the interaction of tastes.

### (Experimental Example 4: Analysis of salt content)

Example 3 and Comparative Example 1 were prepared to analyze a salt content using a salometer, and the results are shown in the following Table 8.

**[Table 8]**

| | Comparative Example 1 | Example 3 |
|---|---|---|
| Salinity (%) | 23% | 8% |

As shown in Table 8, it was confirmed that the salinity was 8% in Example 3 and 23% in Comparative Example 1.

That is, in the fish sauce manufactured using the method of manufacturing the fish sauce according to the present invention, the salt content is drastically smaller than that of the fish sauce of the Comparative Example. Accordingly, it is possible to provide fish sauce having an improved health benefit.

### (Experimental Example 5: Comparison of histamine contents)

Comparative Examples 1 to 4 and Example 3 were prepared to analyze the content of histamine, and the results are shown in the following Table 9.

**[Table 9]**

| | Comparative Example 1 | Comparative Example 2 | Comparative Example 3 | Comparative Example 4 | Example 3 |
|---|---|---|---|---|---|
| Histamine (PPM) | 520 | 256 | 606 | 579 | 12 |

As shown in Table 9, the content of histamine was analyzed to be 520 ppm in Comparative Example 1, 256 ppm in Comparative Example 2, 606 ppm in Comparative Example 3, 579 ppm in Comparative Example 4, and 12 ppm in Example 3.

That is, in the fish sauce manufactured using the method of manufacturing the fish sauce according to the present invention, the content of histamine is drastically lower than that of the Comparative Examples. Accordingly, it is possible to provide a high-quality fish sauce having an improved health benefit.

### (Experimental Example 6: Analysis of total nitrogen content)

Comparative Examples 1 to 4 and Example 3 were prepared to analyze the total nitrogen content, and the results are shown in the following Table 10.

**[Table 10]**

| | Comparative Example 1 | Comparative Example 2 | Comparative Example 3 | Comparative Example 4 | Example 3 |
|---|---|---|---|---|---|
| Total nitrogen (TN,%) | 1.7 | 0.6 | 1.2 | 1.6 | 2.8 |

As shown in Table 10, the total nitrogen content was analyzed to be 1.7% in Comparative Example 1, 0.6% in Comparative Example 2, 1.2% in Comparative Example 3, 1.6% in Comparative Example 4, and 2.8% in Example 3. That is, in the fish sauce manufactured using the method of manufacturing the fish sauce according to the present invention, the total nitrogen content is higher than that of the Comparative Examples. Accordingly, it is possible to provide a high-quality fish sauce.

### (Experimental Example 7: Sensory test)

To evaluate the sensory preference for the fish sauce of Example 3 and the fish sauce of Comparative Example 1, the sensory test was performed, and the results are shown in the following Table 11.

Further, fresh leek kimchi, manufactured using the fish sauce of Example 3 and the fish sauce of Comparative Example 1, was subjected to the sensory test, and the results are shown in the following Table 12.

As evaluation items, overall preference, sweet taste, salty taste, umami taste, fishy taste, fishy odor, bitterness, and the harmony of tastes were used. The sensory test was conducted on a panel of 30 target consumers who actually used the product.

**[Table 11]**

| | Overall preference | Sweet taste | Salty taste | Umami taste | Fishy taste | Fishy odor | Bitter taste | Harmony of tastes |
|---|---|---|---|---|---|---|---|---|
| Comparative Example 1 | 5.0 | 4.8 | 4.2 | 4.8 | 4.4 | 4.0 | 3.5 | 3.8 |
| Example 3 | 6.2 | 6.0 | 5.8 | 6.3 | 2.3 | 2.2 | 2 | 5.8 |

**[Table 12]**

| | Overall preference | Sweet taste | Salty taste | Umami taste | Fishy taste | Fishy odor | Bitter taste | Harmony of tastes |
|---|---|---|---|---|---|---|---|---|
| Comparative Example 1 | 4.8 | 4.2 | 4.2 | 5.0 | 4.2 | 3.8 | 3.5 | 4.0 |
| Example 3 | 6.3 | 5.8 | 5.8 | 6.2 | 2.2 | 2.4 | 2 | 6.0 |

As a result, as shown in Tables 11 and 12, in the fish sauce manufactured using the method of manufacturing the fish sauce according to the present invention, the overall preference and the harmony of tastes were found to be excellent compared to those of the fish sauce of the Comparative Example.

In particular, the content of tryptophan, which is a bitter-tasting amino acid, was about 3.04% based on the total weight of the amino acids in the fish sauce of the Comparative Example. However, even though the content of tryptophan was high, specifically, about 8.74% based on the total weight of the amino acids in the fish sauce manufactured using the method of manufacturing the fish sauce according to the present invention, it could be confirmed that consumers felt weaker bitterness in the fish sauce evaluation and fresh leek kimchi evaluation.

Further, in the case of the fish sauce manufactured using the method of manufacturing the fish sauce according to the present invention, it could be seen that consumers did not strongly sense a fishy taste or a fishy odor, which have been identified as a major disadvantage of conventional fish sauces, compared to the Comparative Example.

### (Experimental Example 8: Analysis of nine major nutritional ingredients)

Comparative Examples 2 to 4 and Example 3 were prepared to analyze major nutritional ingredients, and the results are shown in the following Table 13.

**[Table 13]**

| | Comparative Example 2 | Comparative Example 3 | Comparative Example 4 | Example 3 |
|---|---|---|---|---|
| Calories (kcal/100ml) | 31 | 38.2 | 61 | 127.4 |
| Carbohydrates (g/100ml) | 1.6 | 1.8 | 2.9 | 9.7 |
| Sugars (g/100ml) | 0 | 0 | 0 | 2.9 |
| Proteins (g/100ml) | 5.7 | 7.3 | 11.9 | 22.1 |
| Fats (g/100ml) | 0.2 | 0.2 | 0.2 | 0 |
| Saturated fats (g/100ml) | 0 | 0 | 0 | 0 |
| Trans fats (g/100ml) | 0 | 0 | 0 | 0 |
| Cholesterol (mg/100ml) | 0 | 0 | 0 | 0 |

As shown in Table 13, it was confirmed that, in Example 3, the calories and the amounts of carbohydrates, sugars, and protein ingredients were significantly increased but the amount of the fat ingredient was reduced compared to those of Comparative Examples 2 to 4. That is, in the fish sauce manufactured using the method of manufacturing the fish sauce according to the present invention, the calories and the amounts of carbohydrates, sugars, and protein ingredients were increased but the amount of the fat ingredient was reduced compared to those of the Comparative Examples. Accordingly, it is possible to provide a high-quality fish sauce.

### (Experimental Example 9: Analysis of antioxidant activity)

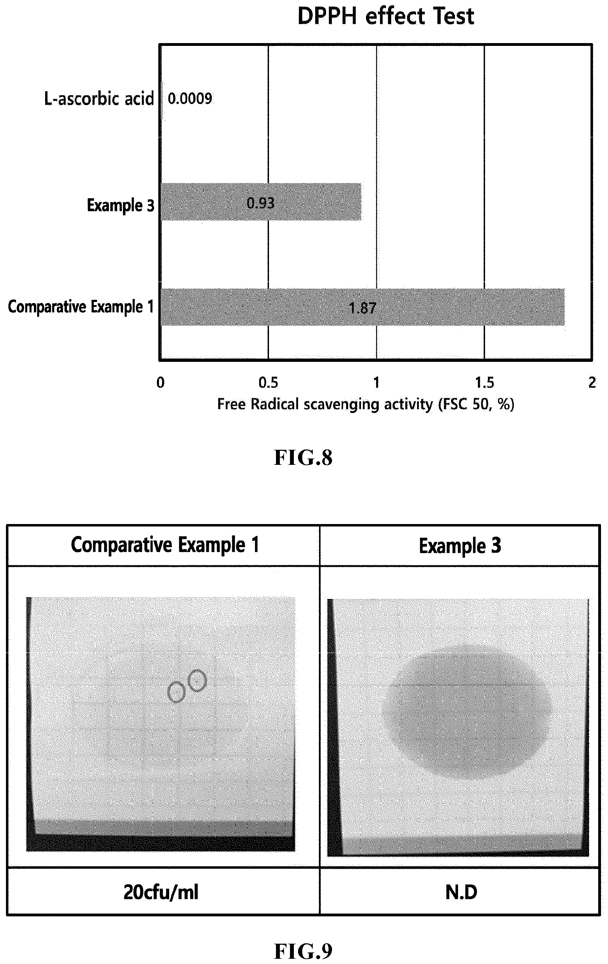

A DPPH test method was performed in order to confirm the antioxidant activity of Comparative Example 1 and Example 3, and the results are shown in FIG. 8.

The DPPH test method is a method for evaluating antioxidant activity based on a change in color when purple diphenyl picrylhydrazyl (a free radical) reacts with an antioxidant agent to be converted into diphenyl picrylhydrazine (a nonradical) having a light yellow color. The absorbance value (OD) was obtained at 517 nm, which is a maximum absorption wavelength of a purple color, and the antioxidant activities of L-ascorbic acid and Comparative Examples 1 and 3 were evaluated.

As shown in FIG. 8, it was confirmed that the concentration of the L-ascorbic acid that was required in order to remove 50% of the DPPH radical was 0.0009% (FSC₅₀ = 0.0009%), the concentration of Comparative Example 1 required to remove 50% of the DPPH radical was 1.87% (FSC₅₀ = 1.87%), and the concentration of Example 3 required to remove 50% of the DPPH radical was 0.93% (FSC₅₀ = 0.93%).

Accordingly, it was confirmed that the fish sauce manufactured using the method of manufacturing the fish sauce according to the present invention had antioxidant activity about two times higher than that of Comparative Example 1.

### (Experimental Example 10: Analysis of microbial contamination)

Comparative Example 1 and Example 3 were prepared to measure the microbial contamination of general bacteria, and the results are shown in FIG. 9.

For the purpose of the analysis of microbial contamination, Comparative Example 1 and Example 3 were exposed to room temperature for 48 hours, diluted tenfold, inoculated into a 3M Petrifilm medium, and incubated at 35 ± 1°C for 48 hours to thus measure microbial contamination.

As shown in FIG. 9, in the case of Comparative Example 1, the microbial contamination of general bacteria was measured as 20 cfu/ml, and in the case of Example 3, contaminating bacteria were not detected.

Accordingly, when Comparative Example 1 is stored at room temperature, it is expected that the microbial contamination thereof shows a similar tendency to the measured value for commercial fish sauce, specifically 27 to 190 cfu/mL. When Example 3 is stored at room temperature, it is expected that contaminating bacteria are not detected.

As described above, in the method of manufacturing the fish sauce according to the present invention, fish/shellfish raw materials may be agitated and then fermented, and only a small amount of salt may be added thereto, thus manufacturing the fish sauce. Accordingly, a fermentation period is drastically shortened, the fish sauce has a low content of salt, and antioxidant activity is ensured, thereby improving a health benefit.

Moreover, since a fermentation process is completed within a short period, it is possible to minimize the content of histamine generated during the fermentation process. Further, the total content of free amino acids is greatly increased, and sweet-tasting amino acids, umami-tasting amino acids, and bitter-tasting amino acids are included at an optimal ratio. Accordingly, even when the content of tryptophan, which is known as one of the bitter-tasting amino acids, is greatly increased, the taste of the fish sauce is improved due to the interaction of tastes.

As described above, the present invention has been illustrated and described with reference to preferred embodiments. However, the present invention is not limited to the above-described embodiments, and various changes and modifications may be made by those skilled in the art without departing from the spirit of the present invention.

### Industrial Applicability

According to a fish sauce and a method of manufacturing a fish sauce according to the present invention, antioxidant activity is ensured, and the fish sauce has minimized content of histamine, which is a biogenic amine, whereby it is possible to use the fish sauce as a food with improved health functionality.

## Claims

1. A fish sauce manufactured using fish and shellfish as a raw material according to a fermentation process, the fish sauce comprising:
among amino acids, tryptophan in a content of more than 5 wt% based on a total weight of the amino acids.

2. The fish sauce of claim 1, wherein, among the amino acids, 35 to 45 wt% of sweet-tasting amino acids and 15 to 25 wt% of umami-tasting amino acids are included based on the total weight of the amino acids.

3. The fish sauce of claim 2, wherein the sweet-tasting amino acids include serine, threonine, glycine, proline, leucine, and alinine, and the umami-tasting amino acids include glutamic acid and aspartic acid.

4. The fish sauce of claim 1, wherein the fish sauce includes a salt in a content of less than 10 wt% based on a total weight of the fish sauce.

5. The fish sauce of claim 1, wherein the fish sauce includes histamine in a content of less than 50 ppm.

6. The fish sauce of claim 1, wherein the fish and shellfish are any one selected from the group consisting of sand lance, anchovy, tuna, shrimp, herring, mackerel, and a combination thereof.

7. A method of manufacturing a fish sauce, the method comprising:
preparing fish/shellfish raw materials;
fermenting the prepared fish/shellfish raw materials; and
obtaining a filtrate by filtering a fermented substance generated during the fermenting and then removing a residue,
wherein the fermenting is performed with agitation under an anaerobic condition at 50 to 300 rpm, and the filtrate includes, among amino acids, tryptophan in a content of more than 5 wt% based on a total weight of the amino acids.

8. The method of claim 7, wherein the fermenting is performed in 7 days or less.

9. The method of claim 8, wherein the fermenting is performed at a predetermined temperature in a temperature range from 45 to 55°C.

10. The method of claim 8, further comprising:
adding a salt to a filtrate obtained through the obtaining the filtrate after the obtaining the filtrate.

11. The method of claim 10, wherein in the adding the salt, the salt is added in a content of less than 10 parts by weight based on 100 parts by weight of fish/shellfish raw materials.

12. The method of claim 8, wherein fish/shellfish raw materials are any one selected from the group consisting of sand lance, anchovy, tuna, shrimp, herring, mackerel, and a combination thereof.

13. The method of claim 8, wherein the preparing the fish/shellfish raw materials includes washing the fish/shellfish raw materials and a semi-drying step of drying the washed fish/shellfish raw materials so that a moisture content thereof is 30 to 55%.

14. The method of claim 10, further and sequentially comprising:
after the adding the salt,
aging the filtrate to which the salt is added; and
sterilizing the aged filtrate to obtain a liquid fish sauce.

15. The method of claim 14, wherein the aging is performed at a predetermined temperature in a temperature range from 45 to 55°C for 10 to 15 days.

16. The method of claim 14, wherein the sterilizing includes performing heat treatment at a predetermined temperature in a temperature range from 70 to 100°C for 5 to 30 minutes.

17. The method of claim 14, wherein the fish sauce includes, among amino acids, 35 to 45 wt% of sweet-tasting amino acids and 15 to 25 wt% of umami-tasting amino acids based on a total weight of the amino acids, the sweet-tasting amino acids include serine, threonine, glycine, proline, leucine, and alinine, and the umami-tasting amino acids include glutamic acid and aspartic acid.

18. The method of claim 14, wherein the fish sauce includes histamine in a content of less than 50 ppm.
